# FASCICULE DE BREVET EUROPEEN

(11) **EP 1 193 945 B1**
(45) Date de publication et mention de la délivrance du brevet: **27.10.2010**
(21) Numéro de dépôt: 01401326.2
(22) Date de dépôt: 21.05.2001
(51) Int. Cl.: H04L 29/06

(54) **Procédé et appareil pour contrôle d'accès dans un réseau**
Netzwerkzugangsüberwachungsverfahren
Method and apparatus for access control in a network

(30) Priorité: 08.06.2000 FR 0007351
(43) Date de publication de la demande: 03.04.2002
(73) Titulaire: Alcatel Lucent, 75008 Paris (FR)
(72) Inventeur: Pinault, Francis, 92270 Bois-Colombes (FR); Guirauton, Alain, 95100 Argenteuil (FR)
(74) Mandataire: Sciaux, Edmond

(56) Documents cités:
- US-A- 5 987 606
- BLAZE M ET AL: "MANAGING TRUST IN AN INFORMATION-LABELING SYSTEM" EUROPEAN TRANSACTIONS ON TELECOMMUNICATIONS,IT,EUREL PUBLICATION, MILANO, vol. 8, no. 5, 1 septembre 1997 (1997-09-01), pages 491-501, XP000720075 ISSN: 1124-318X
- RESNICK P ET AL: "PICS: INTERNET ACCESS CONTROLS WITHOUT CENSORSHIP" COMMUNICATIONS OF THE ASSOCIATION FOR COMPUTING MACHINERY,US,ASSOCIATION FOR COMPUTING MACHINERY. NEW YORK, vol. 39, no. 10, 1 octobre 1996 (1996-10-01), pages 87-93, XP000642207 ISSN: 0001-0782

## Description

L'invention a pour objet un procédé destiné à assurer un contrôle d'accès pour et/ou vis-à-vis d'utilisateurs qui accèdent à un réseau informatique, tel que notamment, le réseau Internet, par l'intermédiaire d'un noeud d'accès privé, tel qu'un autocommutateur d'une entreprise. Elle concerne aussi divers agencements organisés pour permettre la mise en oeuvre du procédé selon l'invention.

D'une manière plus particulière, l'invention est destinée à être exploitée par des organisations et notamment des entreprises où des utilisateurs sont équipés de terminaux qui leur permettent d'accéder à un réseau informatique, et en particulier à un réseau informatique externe à l'organisation dont ils dépendent, tel le réseau Internet, cet accès s'effectuant par l'intermédiaire d'un noeud d'accès privé, au moins partiellement réservé à cette organisation.

Tel est par exemple le cas, lorsqu'une organisation dispose d'une structure interne de communications, et par exemple d'un réseau de communication, câblé ou non, incluant au moins un noeud d'accès, tel que défini ci-dessus, par l'intermédiaire duquel il est prévu que s'effectuent les accès des utilisateurs qui sont réalisés à partir de terminaux propres à l'organisation. Ce noeud d'accès est, par exemple, un autocommutateur (PABX) et en particulier un PABX multimédia dont dispose une organisation pour ses communications, ou encore une structure privée, de type passerelle, d'accès pour un réseau local, de type LAN.

Pour différentes raisons et en particulier pour des raisons économiques, il est important pour une organisation de pouvoir vérifier que les possibilités d'accès qu'elle offre à un réseau informatique et en particulier au réseau Internet, sont exploitées d'une manière appropriée lui évitant en particulier des coûts ou surcoûts qu'elle n'a pas vocation de supporter, ainsi que des risques matériels ou financiers injustifiés.

Une solution de contrôle d'accès connue, dérivant de ce qui était antérieurement prévu en matière de téléphonie, consiste à interdire certains accès aux utilisateurs, lorsqu'ils exploitent des terminaux propres à une organisation. Il est ainsi possible d'empêcher l'accès à certains sites d'un réseau informatique ou à certains types d'information à partir des terminaux d'une organisation, en agissant aux moyens de filtres filtrant les adresses des sites, par exemple au niveau d'une unité rempart ou "firewall" située entre le réseau informatique et le noeud d'accès exploité par les terminaux pour accéder à ce réseau informatique.

Toutefois cette solution n'est pas vraiment satisfaisante, dans la mesure où elle implique une mise à jour permanente des adresses interdites, ce qui est difficile à réaliser, lorsque les accès sont dirigés vers des sites d'un réseau évoluant en permanence comme l'est le réseau Internet, connaissant les possibilités de ré-aiguillage entre sites qu'autorise ce genre de réseau. De plus, le filtrage préalable ne s'effectue que dans des conditions prédéterminées et reste sans effet autrement, ce qui implique qu'il soit régulièrement réactualisé pour être capable de s'adapter aux évolutions techniques.

Certains fichiers multimédia peuvent être téléchargés moyennant un paiement, donnant des droits pour une utilisation limitée. Il est connu d'identifier de tels fichiers multimédia par une signature, appelée signature SDMI, permettant contrôler l'utilisation de ces fichiers après leur téléchargement. Un membre d'une organisation peut outrepasser ses droits d'utilisation, et la responsabilité de cette organisation peut donc être engagée. Une organisation encourt donc des risques lorsqu'elle reçoit de tels fichiers, suite à des demandes d'accès effectuées par l'intermédiaire des terminaux qui lui appartiennent.

Le document US 5.987.606 décrit un dispositif de filtrage situé dans le serveur d'un fournisseur de service Internet. Il permet de détecter des mots interdits ou des phrases interdites, prédéterminés pour chaque client susceptible de se connecter à Internet via ce fournisseur de services. Cette solution est bien adaptée pour des particuliers, mais n'est pas bien adaptée pour une organisation.

L'invention propose donc un procédé destiné à assurer un contrôle d'accès pour et/ou vis-à-vis d'utilisateurs qui accèdent à un réseau informatique permettant des échanges d'informations, tel que notamment, le réseau Internet, au moyen de terminaux, par l'intermédiaire d'un noeud d'accès privé, partagé ou propre à une organisation, telle qu'une entreprise, auquel les terminaux se raccordent pour leurs accès au réseau informatique, via un serveur d'accès.

Il consiste en un stockage temporaire, et un filtrage pour autoriser ou bloquer la transmission de ce flot vers le terminal en fonction de critères déterminés appliqués au flot de données reçu, au niveau du noeud d'accès privé ; et il est **caractérisé en ce que** ledit filtrage consiste à analyser une signature pour permettre de bloquer, au moins temporairement, la transmission de données reçues du réseau à destination d'un terminal d'un utilisateur, lorsque ces données incorporent une signature signalant l'existence de droits restrictifs concernant l'exploitation des données qu'elle accompagne.

Selon l'invention, le procédé prévoit de conserver les données reçues du réseau informatique qui ne sont pas transmises, après une analyse ayant conduit à une décision de non transmission à l'utilisateur, pour pouvoir comparer ces données à des données d'un flot ultérieur, de manière à accélérer la prise de décision, en cas d'identité des données entre flots pour un ensemble déterminé de données, sans avoir à recourir à une analyse correspondant à celle qui avait conduit à ce que les données conservées ne soient pas transmises.

Selon une forme de mise en oeuvre du procédé selon l'invention, il est prévu que le transfert de données reçues du réseau informatique à destination d'un terminal d'utilisateur est temporairement retardé au niveau de moyens de stockage temporaire, jusqu'à détermination de la conformité de ce qui a été reçu par rapport à des normes déterminées, avant transmission au terminal si la conformité est constatée.

Il est aussi prévu de conserver les données temporairement retardées relatives à un flot, qui sont stockées en phase de détermination de conformité, pour permettre un contrôle complémentaire en cas de non-conformité, cette conservation étant réalisée soit pour les données reçues, à détection de la non-conformité, le flot qui les transmet depuis le réseau informatique étant alors interrompu, soit éventuellement pour l'ensemble de données reçues sans que soit interrompu le flot.

Il est également prévu de conserver les données pour lesquelles une non-conformité a été détectée dans un flot reçu et/ou l'origine de ces données, de manière à permettre une interruption d'un flot de données ultérieurement reçu avant analyse complète des données que ce flot transmet, lorsque de telles données et/ou une telle origine sont à nouveau détectées.

Selon l'invention, le procédé prévoit une comptabilisation, à des fins de contrôle, sur la base d'un contenu déterminé d'informations constitué par une combinaison caractéristique de données, lorsqu'un tel contenu est présent dans les données qui sont temporairement stockées après avoir été reçues du réseau informatique dans le cadre d'un ou de plusieurs flots destinés chacun à un terminal déterminé.

Selon une autre forme de mise en oeuvre du procédé selon l'invention, il est prévu une analyse de signatures pour permettre de bloquer, au moins temporairement, la transmission de données reçues du réseau à destination d'un terminal d'un utilisateur, lorsque ces données incorporent une signature caractéristique de signalisation de droits restrictifs.

Il est aussi prévu une analyse de type recherche d'identifiant au niveau des données reçues à destination d'un terminal d'un utilisateur, de manière à autoriser la transmission de ces données à ce terminal, lorsqu'un ou plusieurs identifiants déterminés sont trouvés parmi les données reçues qui sont destinées à ce terminal.

L'invention propose aussi un agencement destiné à assurer un contrôle d'accès pour et/ou vis-à-vis d'utilisateurs qui accèdent à un réseau informatique permettant des échanges d'informations, notamment au réseau Internet, au moyen de terminaux, par l'intermédiaire d'un noeud d'accès privé, partagé ou propre à une organisation, telle qu'une entreprise, auquel les terminaux se raccordent pour leurs accès au réseau informatique, via un fournisseur de services.

Selon l'invention, cet agencement comporte des moyens pour stocker temporairement un flot de données, et des moyens de filtrage pour autoriser ou bloquer la transmission de ce flot vers un terminal en fonction de critères déterminés appliqués au flot de données reçu, au niveau du noeud d'accès privé ; et il est **caractérisé en ce que** lesdits moyens de filtrage comportent des moyens pour analyser une signature et pour bloquer, au moins temporairement, la transmission de données reçues du réseau à destination d'un terminal d'un utilisateur, lorsque ces données incorporent une signature signalant l'existence de droits restrictifs concernant l'exploitation des données qu'elle accompagne.

Selon une forme particulière de réalisation, l'agencement, selon l'invention, est un équipement monté en amont ou en entrée d'un noeud de réseau de communication et par exemple d'un autocommutateur privé.

L'invention, ses caractéristiques et ses avantages sont précisés dans la description qui suit en liaison avec les figures évoquées ci-dessous.
La figure 1 présente un schéma de principe relatif au contrôle d'accès au réseau Internet à partir de terminaux d'utilisateurs et au travers d'un noeud d'accès privé.
La figure 2 présente un schéma d'un agencement de contrôle d'accès, selon l'invention.

Le procédé de contrôle d'accès, selon l'invention est destiné à être mis en oeuvre dans le cadre d'un système où des terminaux sont mis à disposition d'utilisateurs au niveau d'une organisation, telle qu'une entreprise, afin de leur permettre, en particulier, d'accéder à un réseau informatique, tel qu'Internet permettant des échanges d'informations diverses, telles que des informations multimédia se transmettant sous forme de données numériques. Il est plus particulièrement prévu que l'accès des terminaux au réseau informatique s'effectue par l'intermédiaire d'un noeud d'accès privé relié au réseau par l'intermédiaire d'au moins un fournisseur de service, qui est couramment désigné par l'acronyme ISP (Internet Service Provider) dans le cas d'un réseau Internet.

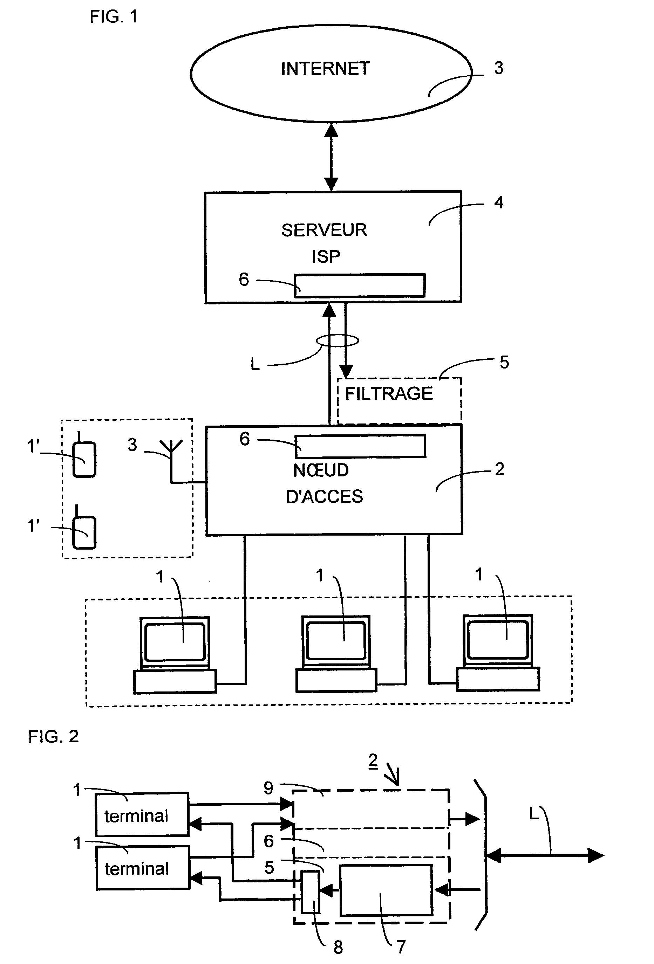

Ceci est schématisé au niveau de la figure 1 où sont symbolisés deux types de terminaux susceptibles d'être mis à disposition des utilisateurs dans une organisation déterminée. Les terminaux 1 sont, par exemple, des ordinateurs reliés par des liaisons filaires à un noeud d'accès 2, les terminaux 1' sont, par exemple, des terminaux informatiques communiquant par voie radio avec le noeud d'accès 2, alors doté de moyens d'émission-réception, ici symbolisés par une antenne 3.

Le noeud d'accès 2 est susceptible d'être constitué de différentes manières en fonction des besoins. Quelle que soit l'option choisie, il dispose d'une fonction de routage pour permettre aux terminaux, tels que 1 ou 1', qu'utilisent les utilisateurs pour accéder à un réseau informatique 3, ici considéré comme étant le réseau Internet. Il est relié à un serveur 4 d'un fournisseur de services de ce réseau, tel un serveur ISP par l'intermédiaire d'une liaison de transmission L.

Le noeud d'accès 2 est, par exemple, un commutateur numérique, du type PABX, exploité pour la desserte de terminaux filaires et/ou éventuellement radio d'une installation de télécommunications privée propre à une organisation, telle qu'une société, ce commutateur étant doté de moyens de routage lui permettant de communiquer en mode paquet avec un serveur ISP d'un fournisseur de services Internet. Ce serveur agit en tant qu'intermédiaire vis-à-vis des terminaux susceptibles d'accéder au réseau Internet que comporte l'installation de télécommunications. Le noeud d'accès 2 peut aussi être une unité de type passerelle, dotée d'une fonction de routage et agissant en tant qu'interface vis-à-vis de terminaux, susceptibles d'accéder au réseau Internet, qui sont comportés par un réseau local, tel que par exemple un réseau LAN (Local area network).

Selon l'invention, il est prévu un agencement de filtrage d'amont ou d'entrée 5 destiné à contrôler les données transmises en retour par le réseau informatique 3, via le serveur 4, à destination de tout terminal 1 ou 1' ayant effectué une demande d'accès au réseau 3. Suivant les configurations prévues en liaison avec les types d'exploitation possibles, cet agencement de filtrage 5 est susceptible d'être un équipement localisé au niveau du noeud d'accès 2 ou du serveur 4, voire de constituer une unité séparée. Quel que soit le cas, il est positionné en amont ou en entrée pour pouvoir intercepter toutes les informations, à destination des terminaux que dessert le noeud d'accès, qui sont transmises depuis le réseau informatique 3, via le serveur 4, suite aux demandes d'accès au réseau effectuées par ces terminaux, comme symbolisé sur la figure 1.

L'agencement de filtrage 5 est supposé plus ou moins directement lié aux logiques programmées de commande 6 d'au moins l'un des sous-ensembles que constituent le noeud d'accès 2 et le serveur 4, dans l'un ou l'autre desquels il peut éventuellement être inclus. Comme indiqué plus haut un noeud d'accès 2, privé, peut être un noeud propre à une organisation déterminée qui l'exploite pour ses besoins, ce peut aussi être un noeud partagé par plusieurs organisations et par exemple mise à disposition par une entreprise spécialisée.

Le procédé de contrôle d'accès, selon l'invention, est prévu pour n'intervenir qu'au niveau du trafic en retour destiné aux terminaux du noeud d'accès 2 où il s'applique, étant entendu qu'il peut bien entendu être prévu pour agir au niveau de plus d'un noeud d'accès et en liaison avec plus d'un serveur au profit d'une même organisation, telle qu'envisagée plus haut, l'exemple schématique donné en liaison avec la figure 1 ne devant pas être considéré comme limitatif.

Ce procédé de contrôle n'intervient pas lors de l'établissement d'une connexion d'un terminal 1 ou 1', avec le serveur 4 d'un fournisseur de services et via le noeud d'accès 2, dans le cadre d'une demande d'accès au réseau informatique 3 effectuée par ce terminal. Comme connu, la logique programmée de commande du noeud d'accès comporte des moyens de stockage d'information lui permettant de conserver les informations qui sont nécessaires à la fonction de routage qu'elle comporte pour diriger le flot de données provenant du réseau informatique, suite à une demande d'accès qu'un terminal a effectué. L'agencement permettant la mise en oeuvre du procédé, selon l'invention, peut éventuellement être associé à un dispositif rempart, de type "firewall" permettant d'interdire l'envoi de requêtes déterminées par les terminaux à destination du réseau informatique et de bloquer l'accès de données provenant de sites déterminés et/ou d'un type prédéterminé.

Selon l'invention, il est prévu qu'un stockage temporaire des données, transmises depuis le réseau informatique vers un terminal, soit effectué avant transmission de ces informations au terminal. Comme indiqué plus haut, ce stockage temporaire peut s'effectuer à différents niveaux de l'ensemble incluant le ou les serveur(s) 4 et le noeud 2 de desserte du terminal 1 ou 1' considéré.

Dans l'exemple schématique de réalisation illustré sur la figure 2, il est prévu un sous-ensemble de stockage temporaire de données 7 relié à la liaison de transmission L au niveau du noeud d'accès 2 qui reçoit les données parvenant du réseau informatique 3, par cette liaison L, à destination des terminaux alors connectés à ce réseau. Comme supposé ci-dessus, ce sous-ensemble de stockage 7 peut éventuellement être positionné au niveau du serveur par l'intermédiaire duquel les données provenant du réseau sont fournies au noeud d'accès, notamment si tous les accès à partir des terminaux desservis par le noeud s'effectuent au travers du même serveur. Les données multimédias reçus par flots du réseau informatique par l'intermédiaire de la liaison L transitent par le sous-ensemble de stockage temporaire 7 avant d'être transmises via une interface de distribution 8 aux terminaux qui en sont les destinataires. Ce dispositif de stockage temporaire est par exemple constitué d'une ou de plusieurs unités de stockage de type disque dur.

Un processus de filtrage est alors réalisé, par l'intermédiaire d'une logique de filtrage et d'analyse, au niveau des données propres à chacun des flots reçus qui sont temporairement présentes dans le dispositif de stockage 7. Cette logique est ici supposée incluse dans la logique de commande 6 qui contrôle le noeud 2 et, en particulier, l'interface de distribution 8 et l'interface de concentration 9 permettant de regrouper les flots de données émanant des terminaux à destination du serveur pour transmission via la liaison. Les filtrages réalisés peuvent être spécifiquement adaptés aux besoins d'une organisation cliente et/ou exploitante pour lui permettre de contrôler l'exploitation des moyens d'accès au réseau informatique 1 qu'elle met à disposition des utilisateurs, par l'intermédiaire des terminaux qu'elle leur attribue.

Suite à une demande d'accès au réseau informatique librement effectuée par un utilisateur au moyen d'un terminal et au travers d'un noeud d'accès équipé d'un agencement de contrôle prévu pour permettre la mise en oeuvre du procédé, selon l'invention, il est donc effectué un travail d'analyse sur le flot de données qui est reçu à destination du terminal utilisé par l'utilisateur, au niveau du dispositif de stockage temporaire 7 où ce flot est envoyé. Les moyens d'analyse et de filtrage susceptibles d'être exploités sont par exemple choisis parmi les moyens déjà connus de l'homme de métier ou spécifiquement réalisés, ils permettent par exemple de rechercher un contenu déterminé d'information dans la totalité ou dans certaines parties spécifiques d'un flot reçu à destination d'un terminal. Cette recherche peut être effectuée de manière systématique ou ponctuelle au niveau d'un flot, par exemple au fil de l'eau, ou périodiquement. Elle peut aussi s'effectuer dans le cadre de configurations particulières, par exemple lorsque le nombre d'accès simultanément actifs est grand ou lorsque certains terminaux ou certaines informations reçues sont prioritaires. Le stockage temporaire de tout ou partie d'un flot reçu ne s'effectue normalement que le temps nécessaire à l'analyse, il n'est donc pas détectable par l'utilisateur dans ces conditions et en particulier lorsque les données destinées à un utilisateur constituent un ensemble dont le volume est important. En effet le temps nécessité pour l'analyse est généralement très inférieur au temps nécessaire à la transmission de cet ensemble de données depuis le réseau informatique jusqu'au noeud d'accès au travers de la liaison L, dans les conditions actuelles. Si le processus d'analyse s'avère efficace et révèle que l'un des critères de filtrage choisi se retrouve au niveau des données reçues dans le cadre d'un flot destiné à un utilisateur, une décision est prise par l'intermédiaire de la logique de commande concernée. Cette décision conduit par exemple à une décision de non transmission qui conduit à bloquer la transmission du flot vers le terminal destinataire, en particulier, s'il est craint que ce qui est reçu présente un certain danger où contient des informations dont la communication n'est pas admise, selon les critères de l'organisation cliente et/ou exploitante. Le blocage peut s'accompagner d'une interruption du flot de données reçues, sur initiative locale, notamment en cas de données susceptibles de constituer un risque au niveau des terminaux, du noeud et/éventuellement du serveur. Un blocage peut ne pas être accompagné par une interruption du flot de données reçues, dans certains cas, en particulier, s'il existe un doute susceptible d'être levé sur la légitimité de la transmission du contenu que constituent des données reçues, à l'utilisateur qui les a requises. Les données reçues peuvent alors être temporairement stockées jusqu'à ce que l'ensemble, par exemple de type fichier, qu'elles forment soit entièrement reçu. La transmission de cet ensemble peut alors être retardée temporairement jusqu'au moment où une décision concernant la légitimité est atteinte, éventuellement après intervention humaine, et où la transmission peut, soit être effectuée vers l'utilisateur, soit définitivement bloquée. Le contrôle de légitimité s'effectue par exemple selon des normes prédéterminées applicables dans des conditions déterminées, via la logique de commande. Il est aussi prévu que dans certaines conditions et notamment en raison de priorités préétablies, la transmission de certains contenus soit retardée au profit de contenus considérés comme prioritaires, ou éventuellement qu'elle soit suspendue, sur décision locale au niveau du noeud ou du serveur, par interruption volontaire des flots exploités pour leur transmission.

Dans une forme de mise en oeuvre du procédé, il est prévu de conserver des données reçues du réseau informatique qui ne sont pas transmises à un utilisateur, après une analyse ayant conduit à une décision de non transmission, de manière à pouvoir exploiter ces données pour accélérer la prise de décision si ces données sont à nouveau reçues dans un flot ultérieur, sans avoir recours à une nouvelle analyse pour ces données reçues à nouveau. Une décision peut alors être prise pour un flot nouvellement entrant en cas d'identité d'un ensemble sélectionné de données nouvellement reçues avec un ensemble déterminé de données stockées. Il est aussi prévu de conserver les informations qui sont relatives à l'origine d'un flot de données et qui figurent dans ce flot pour pouvoir également les exploiter si elles sont trouvées à nouveau dans un flot ultérieur de manière à permettre une interruption de ce flot ultérieur avant que les données qu'ils comportent ne soient entièrement analysées, si cela est justifié.

Dans une variante de mise en oeuvre, il est prévu de temporairement retarder le transfert de données reçues du réseau informatique à destination d'un terminal destinataire, au niveau de moyens de stockage temporaire, jusqu'à détermination de la conformité de ce qui a été reçu, par rapport à des normes déterminées. Il est également prévu de conserver les données qui sont stockées en phase de détermination de conformité pour un flot donné, afin de permettre un contrôle complémentaire en cas de non-conformité. Cette conservation concerne par exemple les données reçues pour un flot jusqu'au moment où la non-conformité a été détectée. Elle peut aussi être réalisée pour l'ensemble des données reçues par l'intermédiaire d'un flot, sans que ce flot ne soit interrompu.

Le contrôle de contenu qui est susceptible d'être réalisé dans le cadre du procédé de contrôle d'accès, selon l'invention, peut aussi être exploité à d'autres fins que l'autorisation de la transmission, au fil de l'eau ou avec un retard contrôlé, des données transmises du réseau informatique vers un terminal ayant établi un accès avec ce réseau par l'intermédiaire du noeud d'accès et d'un serveur. Il est par exemple possible d'effectuer un filtrage relatif à des données caractéristiques d'un contenu déterminé d'informations, par exemple un type de fichier déterminé, en particulier, à des fins de comptabilisation du nombre de fois où ce groupe de données caractéristiques d'un contenu déterminé est reçu au niveau du noeud, à des fins de contrôle de trafic et/ou encore de contrôle sur le plan des coûts, dans le cas de contenus facturés.

Il est également prévu de doter l'agencement de contrôle de moyens essentiellement logiciels lui permettant d'effectuer des opérations d'analyse de signature sur les données d'un flot reçu du réseau, de manière à pouvoir bloquer, soit temporairement, soit encore définitivement, la transmission de données à un terminal destinataire, si ces données incorporent une signature caractéristique. Comme il est connu une telle signature peut par exemple signaler l'existence de droits restrictifs concernant l'exploitation des données qu'elle accompagne. Telle est notamment le cas des signatures SDMI (Secure Digital Music Initiative) destinées à accompagner des données constituant certains fichiers multimédia.

Il est alternativement prévu de faire réaliser des opérations d'analyse à des fins de recherche d'identifiant en vue d'autoriser la transmission de données reçues du réseau informatique dans le cadre d'un flot, si ces données contiennent un ou éventuellement plusieurs identifiants déterminés. Un tel identifiant est par exemple introduit à la création d'un ensemble de données, tel un fichier, destiné à être transmis dans le but d'authentifier la source de cet ensemble. Dans la forme de réalisation envisagée ici, sa reconnaissance à la réception, au niveau d'un agencement de contrôle d'accès selon l'invention, est utilisée pour autoriser et éventuellement déclencher la transmission de l'ensemble de données reçu qu'il accompagne, au terminal destinataire.

Comme indiqué, plus haut la mise en oeuvre du procédé, selon l'invention implique la mise en oeuvre de moyens matériels et logiciels appropriés agencés d'une manière adaptée à l'installation de communication qu'ils équipent. Ces moyens ne seront pas développés plus avant ici, dans la mesure où ils sont connus par ailleurs de l'homme de métier. L'agencement lui-même est par exemple constitué sous la forme d'un équipement destiné à être placé en entrée ou éventuellement en amont du noeud de réseau de communication de manière à contrôler les données qui sont fournies à ce noeud à destination des terminaux d'usager desservis par ce noeud.

## Revendications

1. Procédé destiné à assurer un contrôle d'accès pour et/ou vis-à-vis d'utilisateurs qui accèdent à un réseau informatique (3) permettant des échanges d'informations, notamment au réseau Internet, au moyen de terminaux (1 ou 1'), par l'intermédiaire d'un noeud d'accès (2) privé, partagé ou propre à une organisation, telle qu'une entreprise, auquel les terminaux se raccordent pour leurs accès au réseau informatique, via un serveur d'accès (4),
consistant en un stockage temporaire, et un filtrage (5) pour autoriser ou bloquer la transmission de ce flot vers le terminal en fonction de critères déterminés appliqués au flot de données reçu, au niveau du noeud d'accès privé;
**caractérisé en ce que** ledit filtrage (5) consiste à analyser une signature pour permettre de bloquer, au moins temporairement, la transmission de données reçues du réseau à destination d'un terminal d'un utilisateur, lorsque ces données incorporent une signature signalant l'existence de droits restrictifs concernant l'exploitation des données qu'elle accompagne.

2. Procédé, selon la revendication 1, dans lequel les données reçues du réseau informatique sont temporairement stockées avant d'être transmises ou non au terminal utilisateur, selon les résultats d'une analyse.

3. Procédé, selon la revendication 2, dans lequel il est prévu de conserver les données reçues du réseau informatique qui ne sont pas transmises, après une analyse ayant conduit à une décision de non transmission à l'utilisateur, pour pouvoir comparer ces données à des données d'un flot ultérieur, de manière à accélérer la prise de décision, en cas d'identité des données entre flots pour un ensemble déterminé de données, sans avoir à recourir à une analyse correspondant à celle qui avait conduit à ce que les données conservées ne soient pas transmises.

4. Procédé, selon l'une des revendications 1, 2, dans lequel le transfert de données reçues du réseau informatique à destination d'un terminal d'utilisateur est temporairement retardé au niveau de moyens de stockage temporaire, jusqu'à détermination de la conformité de ce qui a été reçu, par rapport à des normes déterminées, avant transmission au terminal, si la conformité est constatée.

5. Procédé, selon la revendication 4, dans lequel il est prévu de conserver les données temporairement retardées relatives à un flot, qui sont stockées en phase de détermination de conformité, pour permettre un contrôle complémentaire en cas de non-conformité, cette conservation étant réalisée soit pour les données reçues, à détection de la non-conformité, le flot qui les transmet depuis le réseau informatique étant alors interrompu, soit éventuellement pour l'ensemble de données reçues, sans que soit interrompu le flot.

6. Procédé, selon la revendication 4, dans lequel il est prévu de conserver les données pour lesquelles une non-conformité a été détectée dans un flot reçu et/ou l'origine de ces données de manière à permettre une interruption d'un flot de données ultérieurement reçu avant analyse complète des données que ce flot transmet, lorsque de telles données et/ou une telle origine sont à nouveau détectées dans ce flot ultérieurement reçu.

7. Procédé, selon la revendication 1, dans lequel il est prévu une comptabilisation, à des fins de contrôle, sur la base d'un contenu déterminé d'informations, constitué par une combinaison caractéristique de données, lorsque ce contenu est trouvé présent dans les données qui sont temporairement stockées, après avoir été reçues du réseau informatique, par l'intermédiaire d'au moins un flot destiné à un terminal déterminé.

8. Procédé, selon la revendication 2, dans lequel il est prévu une analyse de type recherche d'identifiant au niveau des données reçues à destination d'un terminal d'un utilisateur, de manière à autoriser la transmission de ces données à ce terminal, lorsqu'un ou plusieurs identifiants déterminés sont trouvés parmi les données reçues qui sont destinées à ce terminal.

9. Agencement destiné à assurer un contrôle d'accès pour et/ou vis-à-vis d'utilisateurs qui accèdent à un réseau informatique permettant des échanges d'informations, notamment au réseau Internet, au moyen de terminaux, par l'intermédiaire d'un noeud d'accès privé, partagé ou propre à une organisation, telle qu'une entreprise, auquel les terminaux se raccordent pour leurs accès au réseau informatique, via un fournisseur de services, comportant des moyens (7) pour stocker temporairement un flot de données, et des moyens de filtrage (5) pour autoriser ou bloquer la transmission de ce flot vers un terminal en fonction de critères déterminés appliqués au flot de données reçu, au niveau du noeud d'accès privé **caractérisé en ce que** lesdits moyens de filtrage (5) comportent des moyens pour analyser une signature et pour bloquer, au moins temporairement, la transmission de données reçues du réseau à destination d'un terminal d'un utilisateur, lorsque ces données incorporent une signature signalant l'existence de droits restrictifs concernant l'exploitation des données qu'elle accompagne.

## Claims

1. A method intended to ensure access control for and/or with regard to users who access an information network (3) enabling exchanges of information, particularly the Internet network, by means of terminals (1 or 1'), via a private access node (2), either shared or specific to an organization, such as a company, to which the terminals connect so that they may access the information network, via an access server (4), consisting of a temporary storage, and a filtering (5) to allow or block the transmission of this flow to the terminal as a function of determined criteria applied to the data flow received, in the private access node;
**characterized in that** said filtering (5) consists of analyzing a signature to make it possible to at least temporarily block the transmission of data received from the network to a user's terminal, when this data incorporate a signature indicating the existence of restrictive rights regarding the use of the data that it accompanies.

2. A method according to claim 1, wherein the data received from the information network is temporarily stored before it is transmitted or not transmitted to the user terminal, depending on the results of an analysis.

3. A method according to claim 2, wherein it is provided to store the data received from the information network that is not transmitted, after an analysis that led to a decision to not transmit it to the user, in order to be able to compare this data to data from a later flow, so as to accelerate the decision-making, if some data is the same between flows for a determined set of data, without needing to make use of an analysis corresponding to that which had led to the stored data not being transmitted.

4. A method according to one of the claims 1 or 2, wherein the transfer of data received from the information network intended for the user terminal is temporarily delayed within the temporary storage means, until it has been determined whether it what was received complies with determined standards, before being transmitted to the terminal, assuming compliance is observed.

5. A method according to claim 4, wherein it is provided to save the temporarily delayed data regarding a flow, which is stored during the compliance determination phase, in order to enable an additional check in the event of non-compliance, this saving being carried out either for the received data, if a non-compliance is detected, in which case the flow which transmits them from the information network is interrupted, or potentially for all of the received data, without the flow being interrupted.

6. A method according to claim 4, wherein it is provided to save the data within a received flow for which a non-compliance was detected, and/or the origin of that data, so as to enable an interruption in a flow of data received later before conducting a complete analysis of the data which that flow is transmitting, whenever such data and/or such an origin are detected again in that flow received later.

7. A method according to claim 1, wherein is provided a counting, for checking purposes, based on a determined information content, made up of a characteristic combination of data, whenever that content is found to be present in the data which is temporarily stored, after having been received from the information network, by means of at least one flow intended for a determined terminal.

8. A method, according to claim 2, wherein is provided an identifier-searching analysis is performed within the received data intended for a user's terminal, so as to enable the transmission of that data to that terminal, when one or more determined identifiers are found among the received data which is intended for that terminal.

9. An arrangement intended to provide an access check for and/or with regard to users who access an information network enabling exchanges of information, particularly the Internet network, by means of terminals, via a private access node, either shared or specific to an organization, such as a company, to which the terminals connect so that they may access the information network, via an access server (4), comprising means (7) for temporarily storing a flow of data, and filtering means (5) for allowing or blocking the transmission of that flow to a terminal as a function of determined criteria applied to the data flow received, in the private access node; **characterized in that** said filtering means (5) comprise means for analyzing a signature and for at least temporarily blocking the transmission of data received from the network intended for a user's terminal, when this data incorporates a signature indicating the existence of restrictive rights regarding the use of the data that it accompanies.

## Patentansprüche

1. Verfahren zur Gewährleistung einer Zugangskontrolle für und/oder gegenüber Benutzer(n), welche anhand von Endgeräten (1 oder 1') über einen privaten, einen gemeinsam benutzten oder einen organisationseigenen, zum Beispiel einen unternehmenseigenen Zugangsknoten (2), an welchen sich die Endgeräte für ihren Zugang zum IT-Netzwerk über einen Zugangsserver (4) anschließen, auf ein IT-Netzwerk (3), insbesondere das Internet, für den Austausch von Informationen zugreifen,
wobei das Verfahren darin besteht, eine vorübergehende Speicherung und eine Filterung (5) vorzunehmen, um die Übertragung dieses Datenstroms an das Endgerät entsprechend bestimmten, auf diesen empfangenen Datenstrom angewendeten Kriterien an dem privaten Zugangsknoten zu genehmigen oder zu sperren;
**dadurch gekennzeichnet, dass** die besagte Filterung (5) darin besteht, eine Signatur zu analysieren, um die Übertragung der von dem Netzwerk empfangenen Daten an ein Endgerät eines Benutzers zu genehmigen oder zumindest vorübergehend zu sperren, wenn diese Daten eine Signatur enthalten, welche das Bestehen von restriktiven Rechten in Bezug auf die Auswertung der Daten, die sie begleitet, signalisiert.

2. Verfahren nach Anspruch 1, wobei die von dem IT-Netzwerk empfangenen Daten vorübergehend gespeichert werden, bevor sie abhängig von den Ergebnissen einer Analyse an ein Benutzerendgerät übertragen werden oder nicht.

3. Verfahren nach Anspruch 2, wobei es vorgesehen ist, die von dem IT-Netzwerk empfangenen Daten, welche aufgrund der Analyse, die zu einer Entscheidung der Nichtübertragung an den Benutzer geführt hat, nicht übertragen werden, aufzubewahren, um diese Daten mit den Daten eines späteren Datenstroms vergleichen zu können, um die Entscheidung im Fall einer Übereinstimmung der Daten zwischen Datenströmen für einen bestimmten Satz von Daten zu beschleunigen, ohne eine Analyse, welche der Analyse entspricht, die dazu geführt hatte, dass die aufbewahrten Daten nicht übertragen werden, zu erfordern.

4. Verfahren nach einem der Ansprüche 1 oder 2, wobei die Weiterleitung der von dem IT-Netzwerk empfangenen Daten an ein Benutzerendgerät vorübergehend in den Mitteln für die vorübergehende Speicherung bis zur Ermittlung der Übereinstimmung der empfangenen Daten in Bezug auf bestimmte Normen vor der Übertragung an das Endgerät, wenn die Übereinstimmung festgestellt wurde, verzögert wird.

5. Verfahren nach Anspruch 4, wobei es vorgesehen ist, die vorübergehend verzögerten Daten eines Datenstroms, welcher in der Phase der Ermittlung der Übereinstimmung gespeichert worden sind, aufzubewahren, um im Fall einer Nichtübereinstimmung eine zusätzliche Kontrolle zu ermöglichen, wobei diese Aufbewahrung entweder für die empfangenen Daten bei der Erkennung der Nichtübereinstimmung durchgeführt wird und der Datenstrom, welcher diese von dem IT-Netzwerk überträgt, infolgedessen unterbrochen wird, oder gegebenenfalls für den gesamten Satz von empfangenen Daten durchgeführt wird, ohne dass der Datenstrom unterbrochen wird.

6. Verfahren nach Anspruch 4, wobei es vorgesehen ist, die Daten, für welche eine Nichtübereinstimmung in einem empfangenen Datenstrom erkannt wurde, und/oder den Ursprung dieser Daten aufzubewahren, um eine Unterbrechung eines zu einem späteren Zeitpunkt empfangenen Datenstroms vor der kompletten Analyse der Daten, welche im Rahmen dieses Datenstroms übertragen werden, zu ermöglichen, wenn solche Daten und/oder ein solcher Ursprung erneut in diesem zu einem späteren Zeitpunkt empfangenen Datenstrom erkannt werden.

7. Verfahren nach Anspruch 1, wobei zum Zweck der Prüfung eine Erfassung auf der Basis eines bestimmten Inhalts von Informationen, bestehend aus einer charakteristischen Kombination von Daten, vorgesehen ist, wenn dieser Inhalt in den vorübergehend gespeicherten Daten vorgefunden wird, nachdem sie über mindestens einen für ein bestimmtes Endgerät bestimmten Datenstrom von dem IT-Netzwerk empfangen worden sind.

8. Verfahren nach Anspruch 2, wobei eine Analyse vom Typ Ermittlung einer Kennung in den empfangenen, für ein Endgerät eines Benutzers bestimmten Daten vorgesehen ist, um die Übertragung dieser Daten an dieses Endgerät zu genehmigen, wenn eine oder mehrere bestimmte Kennungen unter den empfangenen, für dieses Endgerät bestimmten Daten vorgefunden werden.

9. Anordnung für die Durchführung einer Zugangssteuerung für und/oder gegenüber Benutzer(n), welche anhand von Endgeräten über einen privaten, einen gemeinsam benutzten oder einen organisationseigenen, zum Beispiel einen unternehmenseigenen Zugangsknoten, an welchen sich die Endgeräte für ihren Zugang zum IT-Netzwerk über einen Diensteanbieter anschließen, auf ein IT-Netzwerk, insbesondere das Internet, für den Austausch von Informationen zugreifen, mit Mitteln (7) zum vorübergehenden Speichern eines Datenstroms, und mit Filtermitteln (5), um die Übertragung dieses Datenstroms an ein Endgerät entsprechend bestimmten, auf diesen empfangenen Datenstrom angewendeten Kriterien an dem privaten Zugangsknoten zu genehmigen oder zu sperren;
**dadurch gekennzeichnet, dass** die besagten Filtermittel (5) Mittel zum Analysieren einer Signatur und zum Sperren, zumindest vorübergehend, der Übertragung der vom Netzwerk empfangenen, für ein Endgerät eines Benutzers bestimmten Daten, wenn diese Daten eine Signatur enthalten, welche das Bestehen von restriktiven Rechten in Bezug auf die Auswertung der Daten, die sie begleitet, signalisiert, umfassen.
